# EUROPÄISCHE PATENTSCHRIFT

(11) **EP 0 875 006 B1**
(45) Veröffentlichungstag und Bekanntmachung des Hinweises auf die Patenterteilung: **27.06.2001**
(21) Anmeldenummer: 96944658.2
(22) Anmeldetag: 24.12.1996
(51) Int. Cl.: G01V 15/00

(54) **KANALISATIONSANLAGE MIT ELEKTRONISCHEM MARKER**
SEWAGE SYSTEM WITH ELECTRONIC MARKER
SYSTEME DE TOUT-A-L'EGOUT AVEC MARQUEUR ELECTRONIQUE

(30) Priorität: 18.01.1996 DE 19601651
(43) Veröffentlichungstag der Anmeldung: 04.11.1998
(73) Patentinhaber: Sander GmbH & Co. KG, 32756 Detmold (DE)
(72) Erfinder: LAMMERING, Thomas, D-33335 Gütersloh (DE)
(74) Vertreter: Kaewert, Klaus
(86) Internationale Anmeldenummer: EP9605840
(87) Internationale Veröffentlichungsnummer: WO9726563

(56) Entgegenhaltungen:
- EP-A- 0 650 169
- WO-A-95/32439
- GB-A- 2 247 904

## Beschreibung

Die vorliegende Erfindung betrifft Kanalisationsanlagen, welche die Übermittlung definierter Informationen zwischen den Kanalisationsanlagen und dem Anlagebediener ermöglichen, sowie ein Verfahren zur Übermittlung dieser Informationen.

Wartungen, Inspektionen und Reparaturen von herkömmlichen Kanalisationsanlagen sind sehr aufwendig. Neben dem Problem der genauen Ortung des Verlaufs von Rohren, Rohrverbindungen o.ä. und der genauen Lokalisierung von Leckagen besteht das Problem, daß wichtige für die Wartung, Inspektion und Reparatur erforderlichen Daten, z.B. Rohrhersteller, Herstellungsdatum, Rohrdimension, Zeitpunkt der letzten Inspektion etc., bereitgehalten oder beschafft werden müssen.

Zur genauen Lokalisierung von Kabelverläufen, insbesondere von Telefonnetzen, werden in jüngster Zeit passive elektronische Marker verwendet, die separat entlang des Kabelverlaufs in das Erdreich eingebracht werden. Diese ermöglichen eine Ortung der entlang des Kabelverlaufs eingegrabenen elektronischen Marker über elektromagnetische Signale. Dies kann sehr nützlich sein, damit beispielsweise bei Erdarbeiten diese Netzsysteme nicht beschädigt werden. Diese elektronischen Markersysteme des Standes der Technik bieten jedoch den Nachteil, daß die verwendeten elektronischen Marker als separate Einheiten getrennt von den Kabeln in das Erdreich eingegraben werden müssen, was einen zusätzlichen aufwendigen Arbeitsschritt darstellt.

Aufgabe der vorliegenden Erfindung ist es, Kanalisationsanlagen bereitzustellen, welche die Übermittlung definierter Informationen zwischen den erfindungsgemäßen Kanalisationsanlagen und dem Anlagenbediener ermöglichen. Die vorliegende Erfindung betrifft auch ein Verfahren zur Übermittlung definierter Informationen zwischen den erfindungsgemäßen Kanalisationsanlagen und dem Anlagenbediener.

Diese Aufgabe wird erfindungsgemäß durch eine Kanalisationsanlage gelöst, in oder an deren Bauteilen ein passiver Markierungschip (elektronischer Marker) angeordnet ist.

Dieser passive Markierungschip kann in einem gegen einwirkende, insbesondere aggressive Medien und gegen starke Vibrationen beständigen Gehäuse angeordnet sein. Beispielsweise können speziell für den Einbau der Betonrohre die äußere Form der Speicherchips und entsprechend belastbare Umhüllungen adaptiert werden.

Ohne Berührung kann der Anlagenbediener dann, z.B. von der Erdoberfläche oder vom Rohrinneren aus, auf dem elektronischen Marker mittels eines Induktionsverfahrens Daten speichern, ändern oder abrufen. Aufwendige Erdarbeiten sind dazu nicht erforderlich.

Die elektronischen Marker sind direkt in die Bauteile, insbesondere Betonrohre oder Schachtdeckel, der Kanalisationsanlagen integriert. Dies kann beispielsweise dadurch geschehen, daß der in einem beständigen Gehäuse befindliche passive Markierungschip in das Betonrohr einbetoniert und somit direkt in die Betonwandung integriert wird. Auch ist es möglich, vor der Verfüllung des Rohrgrabens, z.B. in einem Laminierverfahren, diese Marker auf dem Rohr anzubringen oder z.B. in vorbereitete Öffnungen einzukleben. Darüber hinaus besteht die Möglichkeit, die elektronischen Marker in handelsübliche Schachtabdeckungen (z.B. BEGU-Deckel) einzubetonieren oder einzukleben. Die Anbringung der Markierungschips ist mit allen im Kanalbau verwendeten Materialien kompatibel, so z.B. mit Beton, Steinzeug oder Guß.

Das Bauteil kann ein zur Kanalisationsanlage gehörendes Schachtbauwerk sein, in oder an dem der passive Markierungschip angeordnet ist. Es kann auch eine Druckleitung, z.B. für Fernwärme oder eine Gasleitung sein, die aus den verschiedensten Materialien, wie z.B. Stahl, Guß, PVC, PEHD, Faserzement, Steinzeug, GFK, etc. bestehen kann, in oder an der der passive Markierungschip angeordnet ist. Ferner kann der passive Markierungschip an oder in den zu prüfenden Muffenverbindungen oder Formstücken der Kanalisationsanlage angeordnet sein.

Mit einem Ortungs-, Schreib- und Lesegerät (Scan-Vorrichtung) können diese Marker dann von der Erdoberfläche oder aus dem Kanalinnenraum her sehr genau geortet werden. Mittels dieser Scan-Vorrichtung kann von der Erdoberfläche oder vom Rohrinneren her auch die Aktivierung des passiven elektronischen Markers erfolgen, in dem sich gespeicherte Daten, wie z.B. Rohrhersteller, Herstellungsdatum, Rohrdimension, Rohrstatik, Rohrverbindung, Verlegefirma sowie weitere Informationen wie Prüfkontrolle und Ausstattungsdetails, befinden können.

Die im elektronischen Marker gespeicherten Daten können beispielsweise eingelesen und über eine entsprechende Schnittstelle des Lesegeräts an eine kommunale Kanaldatenbank weitergeleitet werden und in Verbindung mit einer entsprechenden Software die Datenbank (Kanalkataster) aktualisieren. Ebenso können Kanaldatenbankdaten wie z.B. Landeskoordinaten, Betreiberkenndaten etc. einprogrammiert werden. So können alle Informationen des Netzbetreibers rasch ein- und ausgelesen werden und ermöglichen durch geeignete Schnittstellen den Datenaustausch mit allen gängigen Kanalkatastern. Die Langlebigkeit der gespeicherten Daten kann durch zyklische, automatische Erneuerung der Daten sichergestellt werden.

Bei den vorgeschriebenen Kanalinspektionen können die Markierungschips auch von entsprechend ausgerüsteten Kanalkameras und -robotem gelesen werden und sichern so eine genaue Standortbestimmung der Kamera bzw. Roboterposition. Die Inspektionsdaten können dann sowohl in den Markierungschips als auch über die Schnittstelle des Schreib-Lesegerätes in der Datenbank direkt abgespeichert werden. Das gewährleistet ein Minimum an Übertragungsschritten oder eine minimale Fehlerquote durch Informationsmängel.

Die erfindungsgemäße Kanalisationsanlage bietet den Vorteil, daß der elektronische Marker direkt mit der Verlegung der einzelnen Bauteile in das Erdreich eingebracht wird und somit ein zusätzlicher, aufwendiger Arbeitsschritt entfällt. Dadurch wird ein späteres, genaues Orten der Rohrleitungssysteme ohne aufwendige Erdarbeiten ermöglicht. Dadurch, daß die elektronischen Marker direkt in die Bauteile der Kanalisationsanlage integriert sind, sind sie äußeren Einflüssen gegenüber auch deutlich besser geschützt als solche Marker, die separat in das Erdreich eingebracht werden, wie gemäß der Methoden des Standes der Technik.

Die endogen in die einzelnen Bauteile der erfindungsgemäßen Kanalisationsanlagen integrierte Datenbank ermöglicht eine moderne, durchgehende, rechnergestützte Datenverwaltung von Kanalanlagen.

Geeignete, passive elektronische Marker, wie sie erfindungsgemäß verwendet werden, werden beispielsweise von der Firma "Radiodetection" mit Sitz in Bristol/Großbritannien und Niederlassungen in Emmerich/Deutschland sowie in Ridgewood/USA vertrieben.

Gegenstand der vorliegenden Erfindung ist auch ein Verfahren zur Übermittlung definierter Informationen zwischen der erfindungsgemäßen Kanalisationsanlage und dem Anlagenbediener, das dadurch gekennzeichnet ist, daß auf dem passiven Markierungschip (elektronischen Marker) mittels eines Induktionsverfahrens Daten gespeichert, geändert oder abgerufen werden.

Bei jeder Überprüfung, Inspektion oder Reparatur/Sanierung können die entsprechenden Daten in die elektronischen Marker einprogrammiert werden. Über das Schreib-Lesegerät besteht die Möglichkeit, diese Daten direkt in die Kanaldatenbank des Netzbetreibers zu übertragen. Dadurch werden Informationslücken vermieden.

Das erfindungsgemäße Informationsübermittlungsverfahren bietet so die Möglichkeit, ein sich praktisch selbst überwachendes oder ein leicht zu überwachendes Kanalisationsanlagensystem aufzubauen. Leckagen können bereits in ihrer Entstehungsphase an die zentrale Datenbank weitergeleitet werden. Damit werden Umweltgefahren durch exfiltrierendes Abwasser minimiert. Das erfindungsgemäße Verfahren ermöglicht zudem eine preiswerte, unproblematische Überwachung des Kanalisationssystems. Somit werden auch kurze Prüfzyklen ermöglicht. Die Überwachung kann beispielsweise kontinuierlich oder in kurzen Zeitabständen (intermittierend) erfolgen.

Falls dennoch Abwasser austreten sollte, wird das nicht erst nach längst eingetretenen irreparablen schweren Umweltschäden wie z.B. bei einem zehnjährigen Prüfzyklus erkannt, wie gegenwärtig in den meisten Ländern verordnet, sondern kann in beliebig kurzer Zeit durch ein äußerst wirtschaftliches, integriertes Prüfverfahren rasch festgestellt werden.

Darüber hinaus verhindert die permanente oder intermittierende Lecküberwachung, daß sich überhaupt größere Leitungsschäden entwickeln können. Folglich fallen nicht nur minimale Instandsetzungskosten an; die geringen und rasch zu beseitigenden Schäden tragen auch zu einer nennenswerten Verlängerung der Lebensdauer des Kanalsystems bei.

Dieses prädestiniert die neue Systemlösung nicht nur für ihren Einsatz in Trinkwasserschutzgebieten, sondern dürfte sie auch zum Prototyp einer neuen Generation von Abwasserleitungen qualifizieren.

Die erfindungsgemäße Kanalisationsanlage und das erfindungsgemäße Informationsübermittlungsverfahren sind vielseitig einsetzbar, sehr benutzerfreundlich und mit nur geringem Aufwand verbunden.

## Patentansprüche

1. Kanalisationsanlage, dadurch gekennzeichnet, daß in oder an einem ihrer Bauteile ein passiver Markierungschip als elektronischer Marker angeordnet ist, so daß auf ihm mittels eines Induktionsverfahrens Daten zu speichern, zu ändern oder abzurufen sind.

2. Kanalisationsanlage nach Anspruch 1, dadurch gekennzeichnet, daß der passive Markierungschip in einem gegen einwirkende Medien und gegen starke Vibrationen beständigen Gehäuse angeordnet ist.

3. Kanalisationsanlage nach Anspruch 1 oder 2, dadurch gekennzeichnet, daß das Bauteil ein Betonrohr ist, in oder an dem der passive Markierungschip angeordnet ist.

4. Kanalisationsanlage nach Anspruch 1 oder 2, dadurch gekennzeichnet, daß das Bauteil ein Schachtdeckel ist, in oder an dem der passive Markierungschip angeordnet ist.

5. Kanalisationsanlage nach Anspruch 1 oder 2, dadurch gekennzeichnet, daß das Bauteil ein zur Kanalisationsanlage gehöriges Schachtbauwerk ist, in oder an dem der passive Markierungschip angeordnet ist.

6. Kanalisationsanlage nach Anspruch 1 oder 2, dadurch gekennzeichnet, daß das Bauteil eine Druckleitung ist, in oder an der der passive Markierungschip angeordnet ist.

7. Kanalisationsanlage nach einem der Ansprüche 1 oder 2, dadurch gekennzeichnet, daß an oder in den zu prüfenden Muffenverbindungen und Formstücken der Kanalisationsanlage passive Markierungschips angeordnet sind.

8. Verfahren zur Übermittlung definierter Informationen zwischen einer Kanalisationsanlage nach einem der Ansprüche 1 bis 7, und dem Anlagenbediener, dadurch gekennzeichnet, daß auf einem passiven Markierungschip in Form eines elektronischen Markers mittels eines Induktionsverfahrens Daten gespeichert, geändert oder abgerufen werden.

9. Verfahren nach Anspruch 8, dadurch gekennzeichnet, daß der elektronische Marker mit einem Ortungs-, Schreib- und Lesegerät in Form einer Scan-Vorrichtung aktiviert werden kann und die gespeicherten Daten abgerufen, eingelesen, verändert, ergänzt oder über entsprechende Schnittstellen an einen Computer übertragen und dort weiterverarbeitet werden können.

## Claims

1. Sewage system, characterised in that a passive marking chip is arranged, as an electronic marker, in or on one of its components such that, by means of an induction method, data are to be stored on it, altered or called up.

2. Sewage system according to Claim 1, characterised in that the passive marking chip is arranged in a housing resistant to reactive media and resistant to heavy vibration.

3. Sewage system according to Claim 1 or 2, characterised in that the component in or on which the passive marking chip is arranged is a concrete pipe.

4. Sewage system according to Claim 1 or 2, characterised in that the component in or on which the passive marking chip is arranged is a manhole cover.

5. Sewage system according to Claim 1 or 2, characterised in that the component in or on which the passive marking chip is arranged is a shaft construction belonging to the sewage system.

6. Sewage system according to Claim 1 or 2, characterised in that the component in or on which the passive marking chip is arranged is a pressure pipe.

7. Sewage system according to one of Claims 1 and 2, characterised in that passive marking chips are arranged on or in the sleeve couplings and pipe fittings of the sewage system which are to be tested.

8. Method of communicating defined information between a sewage system according to one of Claims 1 to 7, and the system operator, characterised in that data are stored on, altered or called up from a passive marking chip in the form of an electronic marker by means of an induction method.

9. Method according to Claim 8, characterised in that the electronic marker can be activated with a locator and read/write device in the form of a scanner appliance, and the data stored can be called up, read in, altered, supplemented or communicated via corresponding interfaces to a computer and further processed therein.

## Revendications

1. Installation de canalisation, caractérisée par le fait que dans, ou sur, l'un de ces composants est disposée une puce électronique de marquage passif, faisant office de marqueur électronique de manière que sur lui, en utilisant un procédé à induction, des données puissent être mémorisées, modifiées ou interrogées.

2. Installation de canalisation selon la revendication 1, caractérisée par le fait que la puce électronique de marquage passif est disposée dans un boîtier résistant au milieu agissant et résistant à de fortes vibrations.

3. Installation de canalisation selon la revendication 1 ou 2, caractérisée par le fait que le composant est un tube en béton, dans ou sur lequel est disposée la puce électronique de marquage passif.

4. Installation de canalisation selon la revendication 1 ou 2, caractérisée par le fait que le composant est un couvercle de puits, dans ou sur lequel est disposé la puce électronique de marquage passif.

5. Installation de canalisation selon la revendication 1 ou 2, caractérisée par le fait que le composant est un ouvrage de puits appartenant à l'installation de canalisation, dans et sur lequel la puce électronique de marquage passif est disposée.

6. Installation de canalisation selon la revendication 1 ou 2, caractérisée par le fait que le composant est une conduite sous pression, dans ou sur laquelle la puce électronique de marquage passif est disposée.

7. Installation de canalisation selon l'une des revendications 1 ou 2, caractérisée par le fait que des puces électroniques de marquage passif sont disposées sur, ou dans, les raccords à manchons et les pièces de forme à contrôler de l'installation de canalisation.

8. Procédé de transmission d'informations définies entre une installation de canalisation et l'opérateur de l'installation, selon l'une des revendications 1 à 7, caractérisé par le fait que des données sont mémorisées, modifiées ou interrogées au moyen d'un procédé à induction, sur une puce électronique de marquage passif, réalisée sous la forme d'un marqueur électronique.

9. Procédé selon la revendication 8, caractérisé par le fait que le marqueur électronique peut être activé à l'aide d'un appareil de localisation, d'écriture et de lecture réalisé sous la forme d'un dispositif d'exploration et les données mémorisées peuvent être interrogées, enregistrées, modifiées, complétées ou transmises, par l'intermédiaire d'interfaces correspondantes, à un ordinateur et pouvant y être retraitées.
